# EUROPÄISCHE PATENTSCHRIFT

(11) **EP 0 396 647 B1**
(45) Veröffentlichungstag und Bekanntmachung des Hinweises auf die Patenterteilung: **21.10.1998**
(21) Anmeldenummer: 89908971.8
(22) Anmeldetag: 05.08.1989
(51) Int. Cl.: B01J 19/30

(54) **PACKUNG FÜR EINE STOFF- UND WÄRMEAUSTAUSCHKOLONNE**
PACKING FOR A MASS AND HEAT TRANSFER COLUMN
GARNITURE POUR COLONNE D'ECHANGE DE MATIERE ET DE CHALEUR

(30) Priorität: 11.08.1988 BR 8804209
(43) Veröffentlichungstag der Anmeldung: 14.11.1990
(73) Patentinhaber: GEBRÜDER SULZER AKTIENGESELLSCHAFT, CH-8401 Winterthur (CH)
(72) Erfinder: RIEMER, Helmut, 06000 Osasco, SP (BR)
(74) Vertreter: Sparing Röhl Henseler Patentanwälte
(86) Internationale Anmeldenummer: EP8900928
(87) Internationale Veröffentlichungsnummer: WO9001368

(56) Entgegenhaltungen:
- WO-A-85/05287
- DE-A- 2 164 144
- DE-A- 2 310 434

## Beschreibung

Die Erfindung betrifft eine Packung für eine Stoff- und Wärmeaustauschkolonne, in welcher eine gasförmige und eine flüssige Phase miteinander in Kontakt gebracht werden, umfassend eine Vielzahl von gleichen Packungskörpern, die im wesentlichen von der Form eines kreisringförmigen Hohlzylinders sind, dessen Wandung umlaufend nach außen hin konkav und nach innen hin konvex unter Ausbildung von zwei äußeren umlaufenden Rändern ist und bei dem das Verhältnis von Außendurchmesser zur Höhe groß ist.

In Stoff- unnd Wärmeaustauschkolonnen, in denen eine gasförmige Phase mit einer flüssigen Phase in Kontakt gebracht wird, findet ein Stoff- und Wärmeübergang statt, etwa eine Absorption bei Übergang einer Komponente von das gasförmigen in die flüssige Phase, eine Desorption beim Übergang einer Komponente in umgekehrter Richtung oder eine Rektifikation, bei der ein Übergang von Komponenten in beiden Richtungen stattfindet. Da gewöhnlich Temperaturunterschiede herrschen, findet gleichzeitig auch ein Wärmeübergang statt, weshalb die Stoffaustauschkolonnen immer gleichzeitig auch Wärmeaustauschkolonnen sind. Gewöhnlich läßt man die gasförmige Phase im Gegenstrom zur flüssigen Phase durch die Kolonne strömen, nur in seltenen Fällen wird das Gleichstromprinzip angewendet (während Kreuzstrom nur bei dem Wärmeaustausch dienenden Kühltürmen infrage kommt). Die Kolonnen sind mit Einbauelementen versehen, deren Aufgabe es ist, eine hohe Austauschleistung zwischen gasförmiger und flüssiger Phase (Wirksamkeit), einen hohen Durchsatz (Kapazität) für die beiden Phasen und einen möglichst geringen Druckverlust zu erzielen.

Einbauelemente für Stoff- und Wärmeaustauschkolonnen können sowohl in Form von ungeordneten, als auch geordneten Packungen realisiert werden. Geordnete Packungen bestehen vorzugsweise aus grobgefalteten Lamellen, die mit ihren Kämmen sich kreuzend im Winkel zueinander und zur Kolonnenachse angeordnet werden sowie mit einer Feinstruktur in Form von Rillen und Löchern o.dgl. versehen sind. Ihre Herstellung und ihre Anordnung in der Kolonne sind relativ aufwendig.

Ungeordnete Packungen bestehen aus einzelnen Packungskörpern, die einfach in die Kolonne geschüttet werden. Gegenüber geordneten Packungen ist daher die Anordnung in der Kolonne wesentlich vereinfacht. Zu derartigen Packungskörpern gehören die seit langem bekannten Raschig-Ringe, die ein Verhältnis zwischen Durchmesser und Höhe von etwa 1:1 besitzen. Eine Weiterentwicklung hiervon sind sogenannte Pall-Ringe, die sich einwärts erstreckende und entsprechende Löcher belassende kleine Zungen aufweisen, die die Kapazität erheblich verbessert haben. Durch Reduzierung der Relation zwischen Durchmesser und Höhe auf 3:1 unter Weglassung einer Zungenreihe konnten bei den Pall-Ringen Totbereiche reduziert werden.

Ähnlich war die Entwicklung bei dachförmigen, halbzylindrischen, sattelförmigen oder ähnlich gestalteten Packungskörpern, die ebenfalls regellos in die Kolonne geschüttet werden und mit immer komplizierteren Oberflächengestaltungen in Form von Löchern, Rippen, Rillen, Vorsprüngen, Eindrückungen, Zungen u.dgl. versehen wurden.

Ungeordnete Packungen zeigen strukturell bedingt einen relativ hohen Druckverlust in Axialrichtung der Kolonne, der die Kapazität der Packung und die Effektivität des Stoffaustauschs beeinträchtigt.

Dies trifft auch für Packungen zu, die aus Packungskörpern hergestellt werden, wie sie in der DE-A-2 164 144 beschrieben sind. Diese Packungskörper können kreiszylindrisch mit gegebenenfalls konkaver Außenfläche sowie mit einwärts gerichteten Rippen sein, die auch in axialer Richtung bezüglich des zylindrischen Teils vorstehen können. Die Rippen sollen ein Verkeilen der Packungskörper ineinander beim Einschütten verhindern, wodurch der Druckabfall aufgrund der hierdurch bewirkten teilweisen Ausrichtung der Packungskörper aneinander verringert wird. Zumindest bei Packungskörpern, die aus Metall durch Kaltverformung hergestellt werden, ist die Anbringung der Rippen aufwendig und beim Einschütten der Packungskörper in eine Kolonne ergibt sich keine wohlgeordnete Struktur, sondern eine zufällige, ungeordnete Packung, in der es sowohl flach, als auch schräg liegende und vertikal gestellte Packungskörper gibt, die immer noch einen relativ hohen Druckverlust bewirkt.

Aufgabe der Erfindung ist es, eine Packung der eingangs genannten Art zu schaffen, die zu einem verminderten Druckverlust und zu einer erhöhten Kapazität und Effektivität des Stoffaustauschs führt.

Diese Aufgabe wird dadurch gelöst, daß die Packung aus einer Vielzahl von übereinander angeordneten Lagen von flachliegenden, in jeder Lage zufällig verteilten, innen einen freien Durchtrittsquerschnitt aufweisenden Packungskörpern besteht, die ein Verhältnis von Außendurchmesser zur Höhe von etwa 6:1 bis etwa 10:1 besitzen.

Die verwendeten Packungskörper bestehen aus einem Ring ähnlich einer Fahrradfelge mit einem relativ hohen Verhältnis von Durchmesser zu Höhe, so daß im freien Fall auf einen flachen Untergrund fallende Packungskörper eine flachliegende Position einnehmen, in der sie auf einem umlaufenden Rand aufliegen. Die Wahrscheinlichkeit, daß sie hierbei eine vertikale Position einnehmen, ist denkbar gering, da diese Position den labilen Gleichgewichtszustand darstellt, der bereits durch geringste Erschütterungen o.dgl., etwa das Auftreffen weiterer herabfallender Packungskörper, beseitigt würde. Hierdurch ist es möglich, durch allmähliches Einfüllen und Verteilen von Packungskörpern in eine Kolonne eine aus übereinander angeordneten Lagen von flachliegenden Packungskörpern gebildete Packung aufzubauen, die somit in Axialrichtung der Kolonne sozusagen geordnet ist, während die Packungskörper einer Lage zufällig und ungeordnet verteilt und praktisch immer gegenüber den ober- und unterhalb benachbarten versetzt sind. Bei einer derartigen Packung wird der Druckverlust gegenüber einer vollständig ungeordneten Packung wesentlich verringert, wodurch die Kapazität und die Effektivität des Stoffaustausches wesentlich verbessert werden können. Bei gleichbleibender Kapazität und Effektivität wird dadurch das Packungsvolumen und damit auch das Gewicht der Packung verringert.

Die Packung wird zudem mittels sehr einfach herstellbarer Packungskörper und mit relativ geringem Arbeitsaufwand während der Füllphase der Kolonne realisiert.

Weitere Ausgestaltungen und Vorteile der Erfindung sind der nachfolgenden Beschreibung und den Unteransprüchen zu entnehmen.

Die Erfindung wird nachstehend anhand der in den beigefügten Abbildungen beispielhaft dargestellten Ausführungsbeispiele näher erläutert.

Fig. 1 zeigt ausschnittweise eine Packung in einer Stoff- und Wärmeaustauschkolonne, in der in der Zeichenebene versetzte Ringe dargestellt sind, während geschnittene Ringe aus Übersichtlichkeitsgründen weggelassen sind.

Fig. 2 zeigt ausschnittweise eine Draufsicht auf die Packung von Fig. 1.

Fig. 3 zeigt eine Ausführungsform eines Packungskörpers für die Packung von Fig. 1.

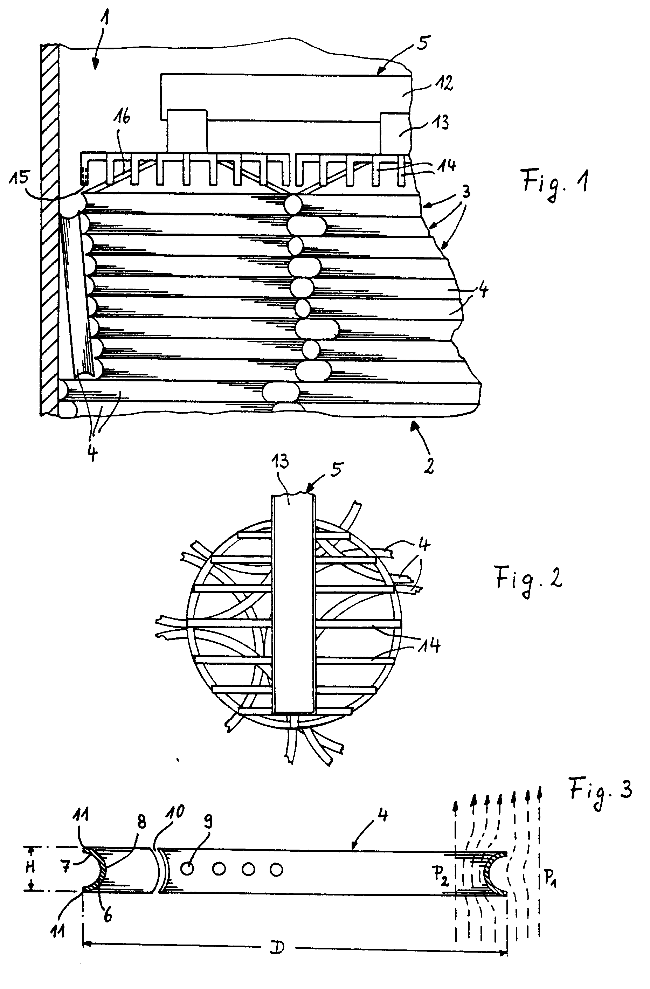

Gemäß Fig. 1 befindet sich in einer Kolonne 1 eine von einem entsprechenden Boden (nicht dargestellt) getragene Packung 2, die aus schichtweise übereinander angeordneten Lagen 3 von Packungskörpern 4 besteht. Oberhalb der Packung 2 befindet sich ein Flüssigkeitsverteiler 5.

Die Packungskörper 4 sind in Form eines kreisringförmigen Hohlzylinders ausgebildet, wobei die Wandung 6 des Hohlzylinders, die eine im wesentlichen gleichmäßige Wandstärke aufweist, umlaufend mit einer konkaven Außenseite 7 und einer konvexen Innenseite 8 versehen ist. Ferner ist das Verhältnis von Außendurchmesser D zur Höhe H des Hohlzylinders so groß, daß der Packungskörper 4 beim Einschütten in eine Kolonne 1 auf deren Kolonnenboden oder einer Schicht aus gleichartigen Packungskörpern 4 eine flachliegende Position, wie sie in Fig. 1 dargestellt ist, einnimmt. Das Verhältnis von Außendurchmesser D zur Höhe H des Hohlzylinders liegt vorzugsweise etwa zwischen 6:1 und 10:1.

Indem derartige Packungskörper 4 behutsam in eine Kolonne 1 eingefüllt und ausgebreitet werden, ergibt sich eine Packung 2 von übereinander angeordneten Lagen 3 von flachliegenden Packungskörpern 4. Eine derartige Packung 2 zeigt zwar eine regellose Anordnung der Packungskörper 4 in jeder Lage 3, wobei zwischen den einzelnen Packungskörpern 4 mehr oder weniger große Abstände vorhanden sind, einzelne Packungskörper 4 aber auch punktweise aneinander liegen werden, jedoch ist in Richtung der Kolonnenachse die Packung 2 geordnet.

Hierdurch wird erreicht, daß der aerodynamische Widerstand gegenüber einer vollständig ungeordneten Packung verringert und damit der Druckabfall innerhalb der Kolonne 1 vermindert wird. Durch die mit den Packungskörpern 4 erzielbare teilgeordnete Packung nehmen die Packungskörper 4 bei gleicher spezifischen Oberfläche zudem einen geringeren Raumanteil ein, d.h. der Packungsfaktor wird verringert bzw. die Kapazität der Packung 2 kann bei gleichbleibendem Packungsvolumen wesentlich gesteigert werden.

Die einwärts gekrümmte Wandung 6 des Packungskörpers 4 verleiht diesem eine ausreichende Festigkeit und dient außerdem dazu, daß sich ein Packungskörper 4 praktisch nicht schräg oder senkrecht in einem horizontalen Packungskörper 4 festklemmen und damit zumindest abschnittweise die Ausbildung von Lagen 3 verhindern kann, sondern sich in einer solchen Stellung im labilen Gleichgewicht befände und daher beim Ausbreiten oder Herabfallen weiterer Packungskörper 4 in die horizontale Lage entsprechend dem stabilen Gleichgewicht umkippt.

Zweckmäßigerweise ist die Wandung 6 im Schnitt kreisringausschnittförmig und insbesondere halbkreisringförmig, jedoch sind auch beispielsweise teilovale Konkavitäten möglich.

Die einwärts gekrümmte Wandung 6 bewirkt auch eine entsprechende Oberflächenvergrößerung, die sich auf den Druckverlust reduzierend und auf die Effektivität und die Kapazität vergrößernd auswirkt.

Die einwärts gekrümmte Wandung 6 führt ferner dazu, daß die flüssige Phase ohne Ausbildung von Flüssigkeitsansammlungen abfließt, so daß die Verweilzeit der flüssigen Phase in der Packung 2 entsprechend gering ist. Hierdurch können bei zur Polymerisation neigenden Substanzen Polymerisationen in der Kolonne 1 vermieden werden. Außerdem werden durch die flüssige Phase in Suspension oder in anderer Weise eingetragene Feststoffe nicht zurückgehalten.

In einer Packung 2 gemäß Fig. 1 strömt die gasförmige Phase immer in Axialrichtung der Kolonne 1 von unten nach oben und damit in wesentlichen in Axialrichtung der einzelnen Packungskörper 4, wobei diese eine Druckdifferenz zwischen dem Bereich benachbart zur Außenseite 7 und dem Bereich benachbart zur Innenseite 8 hervorrrufen, wobei der statische Druck p₁ an der Außenseite 7 größer als der statische Druck p₂ an der Innenseite 8 ist (ähnlich wie beim Flügel eines Flugzeugs). Hierdurch ergibt sich im Inneren jedes einzelnen Packungskörpers 4, der innen einen freien Durchtrittsquerschnitt, d.h. keine einwärts gerichtete Rippen o.dgl. Einbauten aufweist, ein Unterdruck. Dies führt zu verstärkten Gasturbulenzen und damit zu einer entsprechenden Quervermischung der gasförmigen Phase, zumal jeder einzelne Packungskörper 4 gegenüber dem benachbarten der darüber und darunter befindlichen Lage etwas versetzt ist.

Da die flüssige Phase zumindest teilweise am Unterrand der Packungskörper 4 entlang läuft, bis sie auf den Oberrand eines darunter befindlichen Packungskörpers 4 trifft, bewirkt dies eine Mischung der abwärts strömenden flüssigen Phase in Richtung quer zur Kolonnenachse. Hierdurch wird eine im wesentlichen gleichmäßige Zusammensetzung der flüssigen Phase über den Kolonnenquerschnitt erzielt.

Die Quervermischung von gasförmiger und flüssiger Phase bewirkt, daß das treibende Gefälle von Temperatur und/oder Konzentration optimal ausgenutzt werden kann.

Eine genaue horizontale Justierung der Packung 2 bzw. der Packungskörper 4 ist nicht notwendig, eine geringfügige Neigung führt zu einem entsprechenden Abfließen der flüssigen Phase.

Die Wandstärke der Wandung 6 kann beispielsweise etwa zwischen 0,2 und 5,0 mm liegen, während Außendurchmesser D gewöhnlich im Bereich zwischen 10 und 300 mm gewählt werden. Hierbei kann das Minimum des Verhältnisses zwischen Kolonnen- und Packungskörperdurchmesser ohne Effektivitätsverlust etwa 4,6:1 im Vergleich zu minimal 8 bis 12:1 bei üblichen ungeordneten Packungen betragen, so daß insbesondere bei Laborgeräten Packungskörper 4 mit relativ großem Durchmesser D ohne Nachteile verwendet werden können.

Bei Packungskörpern 4 mit kleinerem Durchmesser D wird beobachtet, daß sich diese teilweise an den Kolonnenwänden in vertikaler oder schräger Stellung abstützen. Dies kann bei Kolonnen 1 mit kleinerem Kolonnendurchmesser, bei denen normalerweise viel Flüssigkeit an der Kolonnenwand herabströmt, vorteilhaft genutzt werden, indem diese die Flüssigkeit von der Kolonnenwand in das Kolonneninnere lenken. Auch kann man zu diesem Zweck Packungskörper 4 antsprechend entlang der Kolonnenwand aufstellen, wie in Fig. 1 dargestellt ist.

Die Packungskörper 4 können aus verschiedenen Materialien hergestellt sein, so aus Metall wie Kohlenstoffstahl, rostfreier Stahl, Titan, Kupfer, Messing, Aluminium o.dgl., das zweckmäßigerweise kaltverformt wird, oder aus thermoplastischem Material wie Polypropylen, Polyvinylchlorid, Polyethylen o.dgl. oder aus Keramik, Gummi oder Glas. Das zur Herstellung verwendete Ausgangsmaterial kann vor, während oder nach der Formgebung mit einer Grobstruktur, beispielsweise unter Ausbildung normalerweise nicht von der flüssigen Phase überfluteten Gasdurchtrittsöffnungen 9 (Fig. 3) o.dgl., und/oder mit einer Feinstruktur in Form von Rillen, Erhebungen, Vertiefungen, kleinen Löchern o.dgl. versehen sein, wobei die Anbringung dieser Strukturen von der Art der verwendeten Formgebung für die Packungskörper 4 abhängt. Auch kann der Packungskörper 4 aus einem Gewebematerial, etwa einem Drahtgewebe hergestellt werden.

Insbesondere bei Packungskörpern 4 aus Metall kann ein rinnenförmiges Profil oder ein planer Streifen abschnittweise jeweils zu einem Kreisring, gegebenenfalls unter gleichzeitiger Ausbildung der Konkavität, gebogen werden, wobei sich zwischen den gegenüberstehenden Enden ein schmaler Spalt 10 befinden kann (Fig. 3), dessen Breite wesentlich geringer als die Höhe H des Packungskörpers 4 sein sollte, damit sich hierin kein weiterer Packungskörper 4 beim Füllen der Kolonne 1 einklemmt oder verhakt.

Die Enden des zu einem Kreisring gebogenen Profilabschnitts können aber auch beispielsweise durch Nieten, Löten, Kleben etc. miteinander verbunden sein.

Durch die nach außen konkave Wandung 6 besitzt der Packungskörper 4 zwei umlaufende Ränder 11, von denen einer gegenüber dem anderen etwas zurückversetzt sein kann, d.h. daß die Durchmesser der beiden Ränder 11 etwas unterschiedlich sind, so daß ein Umfallen der Packungskörper 4 in die flachliegende Position zusätzlich begünstigt wird. Hierbei kann der Durchmesserunterschied so groß sein, daß die Projektion des Schwerpunktes des Packungskörpers 4 in seiner im wesentlichen vertikalen Position auf eine Unterlage außerhalb seiner Standfläche liegt.

Der Flüssigkeitsverteiler 5 umfaßt in der dargestellten Ausführungsform eine Zuführrinne 12 für die flüssige Phase, die hieraus in Verteilerrinnen 13 überlauft. Die Verteilerrinnen 13 besitzen eine Reihe von bodenseitig angeordneten Austrittsleitungen 14 mit Austrittsöffnungen 15. Die Austrittsleitungen 14 sind hierbei gruppenweise so angeordnet, daß ihre Austrittsöffnungen 15 auf einem Kreis korrespondierend zu einem darunter befindlichen Packungskörper 4 der obersten Lage 3 der Packung 2 angeordnet sind. Hierdurch wird die aus den Austrittsöffnungen 15 austretende Flüssigkeit gezielt auf die Packungskörper 4 der obersten Lage 3 aufgegeben und kann nicht eine unbestimmte Strecke frei als Strahl durch die Packung 2 hindurch fallen. Um die Ausrichtung der Packungskörper 4 der obersten Lage 3 mit den Gruppen von Austrittsleitungen 14, deren Auslauföffnungen 15 im Kreis angeordnet sind, sicherzustellen, können die Packungskörper 4 der obersten Lage 3 über Streben 16 o.dgl. verbunden sein, so daß die oberste Lage 3 der Packung 2 zusammen mit dem Flüssigkeitsverteiler 5 in die Kolonne 1 eingesetzt wird.

Stattdessen kann die oberste Lage 3 der Packung 2 auch aus untereinander verbundenen Packungskörpern 4 bestehen, wobei zweckmäßigerweise unter jeder Austrittsöffnung 15 ein Packungskörper 4 der ersten Lage 3 angeordnet ist.

Die eine Einheit bildende oberste Lage 3 kann gleichzeitig einen Niederhalter für die Packung 2 gegen ein Anheben der Packung 2 bei übermäßiger Gasbelastung bilden. Auch der Flüssigkeitsverteiler 5 als solcher oder zusammen mit der obersten Lage 3 kann den Niederhalter bilden, oder beide können Bestandteil des Niederhalters sein.

Bei Packungskörpern 4 mit einem entsprechend kleinen Durchmesser können die Austrittsöffnungen 15 bzw. die Austrittsleitungen 14 gewöhnlich nicht gruppenweise zusammengefaßt werden, jedoch ist es zweckmäßig, wenn wenigstens jedem Packungskörper 4 eine Austrittsöffnung 15 zugeordnet ist, die die von ihr abgegebene flüssige Phase auf diesen Packungskörper 4 der obersten Lage 3 aufgibt.

## Patentansprüche

1. Packung (2) für eine Stoff- und Wärmeaustauschkolonne (1), in welcher eine gasförmige und eine flüssige Phase miteinander in Kontakt gebracht werden, umfassend eine Vielzahl von gleichen Packungskörpern (4), die im wesentlichen von der Form eines kreisförmigen Hohlzylinders sind, dessen Wandung (6) umlaufend nach außen hin konkav und nach innen hin konvex unter Ausbildung von zwei äußeren umlaufenden Rändern (11) ist und bei dem das Verhältnis von Außendurchmesser (D) zur Höhe (H) groß ist, dadurch **gekennzeichnet,** daß die Packung (2) aus einer Vielzahl von übereinander angeordneten Lagen (3) von flachliegenden, in jeder Lage (3) zufällig verteilten, innen einen von hineinragenden Bauteilen freien Durchtrittsquerschnitt aufweisenden Packungskörpern (4) besteht, die ein Verhältnis von Außendurchmesser (D) zur Höhe (H) von etwa 6:1 bis etwa 10:1 besitzen.

2. Packung nach Anspruch 1, dadurch gekennzeichnet, daß bei den Packungskörpern (4) der Durchmesser eines umlaufenden Randes (11) etwas kleiner als der des anderen umlaufenden Randes (11) ist.

3. Packung nach Anspruch 1 oder 2, dadurch gekennzeichnet, daß sich an der Kolonneninnenwand abstützende, vertikal oder schräg gestellte Packungskörper (4) zum Umlenken von an der Kolonneninnenwand herabströmender flüssiger Phase in das Kolonneninnere befinden.

4. Packung nach einem der Ansprüche 1 bis 3, dadurch gekennzeichnet, daß die Packungskörper (4) eine Oberflächenstrukturierung zur Verbesserung der Flüssigkeitsverteilung hierauf aufweisen.

5. Packung nach einem der Ansprüche 1 bis 4, dadurch gekennzeichnet, daß die Wandung (6) der Packungskörper (4) mit Gasdurchtrittsöffnungen (9) versehen ist.

6. Packung nach einem der Ansprüche 1 bis 5, dadurch gekennzeichnet, daß die Packungskörper (4) aus einem Metall durch Kaltverformung hergestellt sind.

7. Packung nach Anspruch 6, dadurch gekennzeichnet, daß die Packungskörper (4) aus einem bandförmigen Abschnitt unter Belassung eines schmalen Zwischenraums (10) zwischen den Bandenden geformt sind.

8. Packung nach einem der Ansprüche 1 bis 7, dadurch gekennzeichnet, daß die oberste Lage (3) in einer vorbestimmten Anordnung zu einem darüber befindlichen Flüssigkeitsverteiler (5) angeordnet ist.

9. Packung nach Anspruch 8, dadurch gekennzeichnet, daß der Flüssigkeitsverteiler (5) Auslauföffnungen (15) aufweist, von denen wenigstens jeweils eine einem Packungskörper (4) der obersten Lage (3) der Packung (2) zugeordnet ist.

10. Packung nach Anspruch 9, dadurch gekennzeichnet, daß der Flüssigkeitsverteiler (5) mit einer Vielzahl von Gruppen von kreisförmig angeordneten Auslauföffnungen (15) versehen ist, welche Gruppen sich jeweils oberhalb von einem zugeordneten Packungkörper (4) der obersten Lage (3) derart befinden, daß die aus den Auslauföffnungen (15) austretende Flüssigkeit auf die Packungskörper (4) der obersten Lage (3) trifft.

11. Packung nach einem der Ansprüche 8 bis 10, dadurch gekennzeichnet, daß die Packungskörper (4) der obersten Lage (3) mit dem Flüssigkeitsverteiler (5) verbunden sind.

12. Packung nach einem der Ansprüche 8 bis 11, dadurch gekennzeichnet, daß die Packungskörper (4) der obersten Lage (3) untereinander verbunden sind.

13. Packung nach Anspruch 11 oder 12, dadurch gekennzeichnet, daß der Flüssigkeitsverteiler (5) und/oder die eine Einheit bildende oberste Lage (3) Teil eines Niederhalters sind oder diesen bilden.

14. Packung nach einem der Ansprüche 1 bis 13, dadurch gekennzeichnet, daß über der obersten Lage (3) von Packungskörpern (4) ein Flüssigkeitsverteiler (5) mit einer Zuführrinne (12), davon ausgehenden Verteilerrinnen (13) sowie von den Verteilerrinnen (13) ausgehenden, Auslauföffnungen (15) aufweisenden Austrittsleitungen (14), die jeweils gruppenweise in einem Kreis korrespondierend zu einem darunter befindlichen Packungskörper (4) der obersten Lage (3) angeordnet sind, vorgesehen ist.

15. Packung nach Anspruch 14, dadurch gekennzeichnet, daß eine Lage (3) von nebeneinander flach liegend angeordneten Packungskörpern (4) mit dem Flüssigkeitsverteiler (5) verbunden ist.

## Claims

1. Packing (2) for a mass and heat exchange column (1), in which a gaseous and a liquid phase are brought into contact with each other, comprising a plurality of identical packing members (4), which are essentially in the shape of a circular hollow cylinder, whereof the wall (6) on its periphery is concave towards the outside and convex towards the inside with the formation of two outer peripheral edges (11) and in which the ratio of outer diameter (D) to height (H) is high, characterised in that the packing (2) consists of a plurality of superimposed layers (3) of packing members (4) lying flat, distributed at random in each layer (3) and on the inside having a cross-section of passage free from projecting components, which members have a ratio of outer diameter (D) to height (H) of approximately 6:1 to approximately 10:1.

2. Packing according to Claim 1, characterised in that in the packing members (4), the diameter of one peripheral edge (11) is somewhat smaller than that of the other peripheral edge (11).

3. Packing according to Claim 1 or 2, characterised in that packing members (4) supported on the inner wall of the column and arranged vertically or in an inclined manner are provided for guiding the liquid phase flowing down on the inner wall of the column, into the inside of the column.

4. Packing according to one of Claims 1 to 3, characterised in that the packing members (4) have a surface structure for improving the liquid distribution thereon.

5. Packing according to one of Claims 1 to 4, characterised in that the wall (6) of the packing members (4) is provided with openings (9) for the passage of gas.

6. Packing according to one of Claims 1 to 5, characterised in that the packing members (4) are made from a metal by cold deformation.

7. Packing according to Claim 6, characterised in that the packing members (4) are formed from a strip-like section leaving a narrow gap (10) between the ends of the strip.

8. Packing according to one of Claims 1 to 7, characterised in that the uppermost layer (3) is arranged at a predetermined location from a liquid distributor (5) located thereabove.

9. Packing according to Claim 8, characterised in that the liquid distributor (5) comprises outlet openings (15), of which at least one is respectively associated with a packing member (4) of the uppermost layer (3) of the packing (2).

10. Packing according to Claim 9, characterised in that the liquid distributor (5) is provided with a plurality of groups of outlet openings (15) arranged in a circle, which groups are respectively located above an associated packing member (4) of the uppermost layer (3) so that the liquid emerging from the outlet openings (15) encounters the packing members (4) of the uppermost layer (3).

11. Packing according to one of Claims 8 to 10, characterised in that the packing members (4) of the uppermost layer (3) are connected to the liquid distributor (5).

12. Packing according to one of Claims 8 to 11, characterised in that the packing members (4) of the uppermost layer (3) are connected to each other.

13. Packing according to Claim 11 or 12, characterised in that the liquid distributor (5) and/or the uppermost layer (3) forming a unit are part of holding-down means or form the latter.

14. Packing according to one of Claims 1 to 13, characterised in that provided above the uppermost layer (3) of packing members (4) is a liquid distributor (5) with a supply channel (12), distributor grooves (13) emanating therefrom as well as outlet lines (14) starting from the distributor grooves (13) and comprising outlet openings (15), which are arranged respectively in groups in a circle corresponding to a packing member (4) located therebelow, of the uppermost layer (3).

15. Packing according to Claim 14, characterised in that a layer (3) of packing members (4) arranged to lie flat one beside the other, is connected to the liquid distributor (5).

## Revendications

1. Garniture (2) pour une colonne de transfert de matière et de chaleur (1), dans laquelle sont mises en contact mutuel une phase gazeuse et une phase liquide, comprenant une pluralité d'éléments identiques de garniture (4), lesquels sont sensiblement en forme d'un cylindre creux dont la paroi (6) est concave vers l'extérieur et convexe vers l'intérieur avec présence de deux bordures périphériques extérieures (11), et dans lequel le rapport entre le diamètre extérieur (D) et la hauteur (H) est important, caractérisée en ce qu'elle est constituée en une pluralité de couches superposées (3) d'éléments (4) posés à plat, aléatoirement distribués dans chacune des couches (3), présentant à l'intérieur une section transversale de passage libre de tout composant, et dont le rapport entre le diamètre extérieur (D) et la hauteur (H) se situe entre environ 6:1 et environ 10:1.

2. Garniture selon la revendication 1, caractérisée en ce que dans les éléments (4), le diamètre d'une bordure périphérique (11) est légèrement inférieur à celui de l'autre bordure périphérique (11).

3. Garniture selon la revendication 1 ou 2, caractérisée en ce qu'en vue de dévier vers l'intérieur de la colonne la phase liquide s'écoulant vers le bas de la paroi intérieure de ladite colonne, des éléments de garniture (4), placés verticalement ou obliquement, viennent s'appuyer sur la paroi intérieure de la colonne.

4. Garniture selon l'une des revendications 1 à 3, caractérisée en ce que les éléments de garniture (4) présentent une constitution de surface destinée à améliorer la répartition du liquide sur ladite surface.

5. Garniture selon l'une des revendications 1 à 4, caractérisée en ce que la paroi (6) des éléments de garniture (4) est munie d'orifices (9) pour le passage du gaz.

6. Garniture selon l'une des revendications 1 à 5, caractérisée en ce que les éléments de garniture (4) sont réalisés par déformation à froid d'un métal.

7. Garniture selon la revendication 6, caractérisée en ce que les éléments de garniture (4) sont constitués par des sections en forme de ruban, en laissant libre un interstice étroit (10) entre les extrémités dudit ruban.

8. Garniture selon l'une des revendications 1 à 7, caractérisée en ce que la couche la plus haute (3) est disposée de manière prédéterminée par rapport à un distributeur de liquide (5) se trouvant au-dessus d'elle.

9. Garniture selon la revendication 8, caractérisée en ce que le répartiteur de liquide (5) présente des orifices d'échappement (15) dont l'un au moins est associé à un élément de garniture (4) de la couche la plus haute (3) de la garniture (2).

10. Garniture selon la revendication 9, caractérisée en ce que le répartiteur de liquide (5) est muni d'une pluralité de groupes d'orifices d'échappement (15) disposés en cercle, lesdits groupes se trouvant chacun au-dessus d'un élément de garniture (4) qui leur est associé de la couche la plus haute (3), de telle sorte que le liquide s'échappent par les orifices (15) vienne en contact avec les éléments de garniture (4) de ladite couche la plus haute (3).

11. Garniture selon l'une des revendications 8 à 10, caractérisée en ce que les éléments de garniture (4) de la couche la plus haute (3) sont reliés au répartiteur de liquide (5).

12. Garniture selon l'une des revendications 8 à 11, caractérisée en ce que les éléments de garniture (4) de la couche la plus haute (3) sont reliés mutuellement.

13. Garniture selon la revendication 11 ou 12, caractérisée en ce que le répartiteur de liquide (5) et/ou la couche la plus haute (3) constituant une seule unité, font partie d'un dispositif de serrage vers le bas, ou bien constituent eux-mêmes ce dispositif.

14. Garniture selon l'une des revendications 1 à 13, caractérisée en ce qu'au dessus de la couche la plus haute (3) d'éléments (4) est prévu un distributeur de liquide (5) muni d'une goulotte d'alimentation (12), de goulottes de distribution (13) qui en partent, ainsi que de conduits de sortie (14) partant desdites goulottes (13) et présentant des orifices d'échappement (15), ces conduits de sortie étant regroupés suivant un cercle en correspondance avec un élément (4) respectivement de la couche la plus haute (3), disposé en dessous.

15. Garniture selon la revendication 14, caractérisée en ce qu'une couche (3) d'éléments (4) disposés côte à côte à plat, est reliée au distributeur de liquide (5).
